# EUROPÄISCHE PATENTSCHRIFT

(11) **EP 2 687 293 B1**
(45) Veröffentlichungstag und Bekanntmachung des Hinweises auf die Patenterteilung: **19.12.2018**
(21) Anmeldenummer: 13189324.0
(22) Anmeldetag: 05.11.2008
(51) Int. Cl.: B01L 3/02, F16J 15/32, F16J 15/24

(54) **Dosiervorrichtung mit Radialgleitdichtungsbaugruppe**
Metering device having a radial sliding seal component
Dispositifs de dosage doté d'un module de joint coulissant radial

(43) Veröffentlichungstag der Anmeldung: 22.01.2014
(62) Teilanmeldung aus: 08875008.8
(73) Patentinhaber: Hamilton Bonaduz AG, 7402 Bonaduz (CH)
(72) Erfinder: LECKEBUSCH, Klaus, 7425 Masein (CH)
(74) Vertreter: Ruttensperger Lachnit Trossin Gomoll

(56) Entgegenhaltungen:
- DE-A1- 2 338 353
- FR-A- 770 290
- US-A- 2 255 613
- US-A- 2 342 458
- US-A- 2 434 485
- US-B1- 6 926 867

## Beschreibung

Die vorliegende Erfindung betrifft eine Radialgleitdichtungsbaugruppe mit einem Dichtungsbauteil und mit wenigstens einem mit diesem zusammenwirkenden Vorspannbauteil, wobei das Dichtungsbauteil einen sich in axialer Richtung und in Umfangsrichtung erstreckenden Dichtungsabschnitt aufweist, an welchem eine in eine erste radiale Richtung weisende Dichtungsfläche zur dichtenden und zumindest in axialer Richtung gleitenden Anlage an eine sich in axialer Richtung und in Umfangsrichtung erstreckende Arbeitsfläche ausgebildet ist, und an welchem eine in eine zweite, zur ersten entgegengesetzte radiale Richtung weisende Vorspannfläche zum Radialvorspannkraft übertragenden Eingriff mit dem Vorspannbauteil ausgebildet ist.

Derartige Radialgleitdichtungsbaugruppen werden vor allem in Dosiervorrichtungen, die Kolben-Zylinder-Anordnungen aufweisen, eingesetzt. Derartige Dosiervorrichtungen sind beispielsweise Spritzen, Pipettiervorrichtungen und dergleichen.

In derartigen Dosiervorrichtungen dienen die Radialgleitdichtungsbaugruppen der gattungsgemäßen Art in der Regel dazu, einen Radialspalt zwischen einer Zylinderwandung und einer Wandung der relativ zum Zylinder beweglichen Kolbenstange abzudichten.

Da dieser Radialspalt in der Regel in Umfangsrichtung umlaufend ist, sind vorzugsweise sowohl der Dichtungsabschnitt, insbesondere die darin ausgebildete Dichtungsfläche, sowie die Arbeitsfläche in Umfangsrichtung umlaufend.

Bei bekannten Dosiervorrichtungen des Standes der Technik ist als Radialgleitdichtungsbaugruppe häufig das Dichtungsbauteil über einen O-Ring gestülpt, welcher im montierten Zustand der Radialgleitdichtungsbaugruppe eine radiale Vorspannkraft auf das Dichtungsbauteil ausübt. Dabei drückt der O-Ring gegen die Vorspannfläche des Dichtungsabschnitts und spannt somit die der Vorspannfläche in radialer Richtung entgegengesetzte Dichtungsfläche in radialer Richtung vor.

US2255613 zeigt eine Radialdichtung für eine rotierende Welle und US6926867 zeigt eine Dichtung für eine Pipette mit einem O-Ring als Spannelement.

Nachteilig an dieser bekannten Ausgestaltungsform einer Radialgleitdichtungsbaugruppe ist zum einen, dass die vom O-Ring als dem Vorspannbauteil ausgehende radiale Vorspannkraft aufgrund von großen Formtoleranzen und einer großen Streuung der maßgeblichen Materialeigenschaften der bekannten gummielastischen Vorspannbauteile sehr stark variiert.

Es ist daher Aufgabe der vorliegenden Erfindung, eine gattungsgemäße Radialgleitdichtungsbaugruppe derart weiterzubilden, dass sie eine möglichst reproduzierbare gleichmäßige radiale Vorspannkraft bereitstellt, mit welcher die Dichtungsfläche in radialer Richtung vorgespannt wird.

Diese Aufgabe wird erfindungsgemäß gelöst durch eine Radialgleitdichtungsbaugruppe der eingangs genannten Art, bei welcher das Vorspannbauteil einen Federträger sowie eine Mehrzahl von gesondert ausgebildeten Radialfederabschnitten aufweist, welche zumindest in radialer Richtung federnd an dem Federträger abgestützt sind.

Durch das Vorsehen einer Mehrzahl von gesondert ausgebildeten Radialfederabschnitten kann für jeden einem Radialfederabschnitt zugeordneten Umfangsabschnitt der Vorspannfläche eine definierte radiale Vorspannkraft vorgesehen oder sogar eingestellt werden.

Zur Abstützung der von den Radialfederabschnitten auf das Dichtungsbauteil ausgeübten radialen Vorspannkraft sind die Radialfederabschnitte an einem Federträger des Vorspannbauteils abgestützt. Der Federträger ist somit in der Lage, die Reaktionskräfte der von den einzelnen Radialfederabschnitten ausgeübten Vorspannkräfte aufzunehmen.

Wenn in der vorliegenden Anmeldung die Rede davon ist, dass die Radialfederabschnitte "in radialer Richtung federnd" an dem Federträger abgestützt sind, so soll dies bedeuteten, dass zumindest ein Vorspannkraft übertragender Abschnitt der Radialfederabschnitte unter Einwirkung einer radialen Kraft nach Maßgabe der veränderlichen oder konstanten Federsteifigkeit des betreffenden Radialfederabschnitts in radialer Richtung elastisch verlagerbar ist, der Vorspannkraft übertragende Abschnitt des Radialfederabschnitts sich also nach Aufhebung der Krafteinwirkung im Wesentlichen in seine unbelastete Stellung zurückstellt. Dabei soll nicht ausgeschlossen sein, dass die Radialfederabschnitte zusätzlich auch noch in weitere Richtungen federnd oder beweglich vorgesehen sein können.

Ganz grundsätzlich kann ein Radialfederabschnitt in einer weniger bevorzugten Ausführungsform unter Verwendung einer in radialer Richtung längenveränderlichen Druck- oder Zugschraubenfeder gebildet sein. Dies führt jedoch zu einem erheblichen und häufig unnötigen Montageaufwand, wenngleich durch derartige Schraubenfedern eine sehr genau einstellbare radiale Vorspannkraft an jedem einzelnen Radialfederabschnitt erzielbar ist.

Ganz grundsätzlich kann ein Dichtungsbauteil auch durch eine Mehrzahl von Vorspannbauteilen radial vorgespannt sein. Dazu ist es zur Vermeidung unnötig hoher Fertigungskosten vorteilhaft, wenn die einzelnen Vorspannbauteile gleichartig ausgebildet sind, so dass nur eine einzige Art von Vorspannbauteil gefertigt werden muss.

Falls eine Mehrzahl von Vorspannbauteilen gewünscht ist, so können die einzelnen Vorspannbauteile in axialer Richtung aufeinander folgend angeordnet sein. Dabei können axial benachbarte Vorspannbauteile oder Gruppen von Vorspannbauteilen gleich oder entgegengesetzt orientiert vorgesehen sein. Dadurch können unterschiedliche wohl definierte Radialvorspannungszustände angepasst an unterschiedliche Dichtungsbauteilgeometrien erreicht werden.

Radialgleitdichtungsbaugruppen mit sehr kleinen geometrischen Abmessungen bei gleichzeitig möglichst geringem Herstellungs- oder/und Montageaufwand können dadurch erhalten werden, dass wenigstens ein Radialfederabschnitt im Bereich seines einen Axiallängsendes mit dem Federträger verbunden ist und mit einem mit axialem Abstand zu dem Axiallängsende vorgesehenem Vorspann-Axialabschnitt zur Anlage an die Vorspannfläche ausgebildet ist. In diesem Falle kann ein Radialfederabschnitt blattfederartig in axialer Richtung von dem Federträger vorstehen und mit den von einem idealisierten einseitig eingespannten Balken bekannten Bewegungsformen in radialer Richtung mit seinem freien Längsende federn. Dabei ist der Vorspann-Axialabschnitt an einem Radialfederabschnitt vorzugsweise an einem das freie Axiallängsende des Radialfederabschnitts aufweisenden Bereich vorgesehen. Dies muss jedoch nicht notwendigerweise so sein: durch entsprechende Ausformung des blattfederartigen Radialfederabschnitts kann auch ein zwischen dem mit dem Federträger verbundenen Axiallängsende und dem freien Axiallängsende des Radialfederabschnitts gelegener Axialabschnitt als Vorspann-Axialabschnitt ausgebildet sein, solange er auf Grundlage dieser Ausformung zur Anlage an die Vorspannfläche des Dichtungsbauteils ausgebildet ist, d.h. im montierten Zustand der Radialgleitdichtungsbaugruppe tatsächlich an der Vorspannfläche anliegt.

Zur effektiven Ausnutzung der radialen Vorspannkraft ist es vorteilhaft, wenn die Vorspannfläche in axialer Richtung innerhalb jenes Axialbereichs gelegen ist, in welchem auch die Dichtungsfläche gelegen ist, oder sich die beiden Flächen axial überlappen. Dies muss jedoch nicht so sein.

Da der Federträger in der Regel eine Vielzahl von Funktionsaufgaben übernehmen kann, von welchen die Halterung der Radialfederabschnitte nur eine darstellt, ist es vorteilhaft, wenn der Federträger zur Halterung von Radialfederabschnitten einen sich in Umfangsrichtung erstreckenden Trägerabschnitt aufweist, von welchem wenigstens ein Radialfederabschnitt in axialer Richtung absteht.

Da, wie eingangs beschrieben, in der Regel die Dichtungsfläche in Umfangsrichtung umlaufend ausgestaltet ist, ist es vorteilhaft, wenn auch der Trägerabschnitt in Umfangsrichtung umlaufend ausgebildet ist.

Um die erforderliche Bauteileanzahl zur Bildung einer erfindungsgemäßen Radialgleitdichtungsbaugruppe möglichst gering zu halten, ist es vorteilhaft, wenn möglichst viele, vorzugsweise alle Radialfederabschnitte von dem Trägerabschnitt in axialer Richtung abstehen.

Dabei kann es gewünscht sein, die radiale Vorspannkraft über einen möglichst großen axialen Bereich auf das Dichtungsbauteil einwirken zu lassen, wozu daran gedacht sein kann, Radialfederabschnitte in entgegengesetzte axiale Richtungen vom Trägerabschnitt abstehen zu lassen.

Ein bevorzugtes, weil in seinen axialen Abmessungen möglichst kleines Vorspannbauteil kann man jedoch dann erhalten, wenn die vom Trägerabschnitt abstehenden Radialfederabschnitte alle in dieselbe axiale Richtung abstehen. Bei der bevorzugten Verwendung der hier beschriebenen Radialgleitdichtungsbaugruppe in einer Dosiervorrichtung kann ein in der Dosiervorrichtung üblicherweise vorgesehenes veränderliches Volumen größtmöglich ausgebildet werden, wenn die Radialfederabschnitte von dem Trägerabschnitt in axialer Richtung von dem veränderlichen Hohlraum weg abstehen.

Weiter kann in einer weniger bevorzugten Ausführungsform daran gedacht sein, die Radialfederabschnitte mit axialem Versatz zueinander anzuordnen. Dies ist jedoch aufgrund der daraus resultierenden großen axialen Baulänge des Vorspannbauteils weniger erwünscht.

Die Ausübung einer radialen Vorspannkraft von den einzelnen Radialfederabschnitten auf die Dichtungsbaugruppe über im Wesentlichen die gesamte Erstreckung des Dichtungsabschnitts in Umfangsrichtung kann dadurch gewährleistet werden, dass die Radialfederabschnitte in Umfangsrichtung benachbart angeordnet sind.

Eine vorteilhafte Radialgleitdichtungsbaugruppe, welche aus möglichst wenig Einzelteilen gebildet werden kann, kann dadurch erhalten werden, dass wenigstens ein Teil der, vorzugsweise alle Radialfederabschnitte einstückig mit dem Trägerabschnitt ausgebildet ist bzw. sind. Hierzu kann besonders vorteilhaft das gesamte Vorspannbauteil als ein einstückiges Bauteil ausgeführt sein.

Konstruktiv kann das Vorspannbauteil, insbesondere wenn es als ein einstückiges Bauteil ausgeführt sein soll, zur einfachen Gestaltung einen rohrförmigen Abschnitt aufweisen, welcher eine Mehrzahl von in Umfangsrichtung benachbarten axialen Schlitzen aufweist, deren axiale Länge kürzer ist als jene des rohrförmigen Abschnitts, und welche vorzugsweise von einem axialen Längsende des rohrförmigen Abschnitts ausgehend zum jeweils anderen axialen Längsende des rohrförmigen Abschnitts hin verlaufen. Der rohrförmige Abschnitt kann somit "kronenförmig" ausgestaltet sein, mit einem Ring als Trägerabschnitt und davon in dieselbe axiale Richtung abstehenden blattfederartigen Radialfederabschnitten.

Um sicherzustellen, dass das Vorspannbauteil im montierten Zustand der Radialgleitdichtungsbaugruppe eine gewünschte radiale Vorspannkraft auf den Dichtungsabschnitt des Dichtungsbauteils ausübt, kann das Vorspannbauteil derart konstruktiv ausgeführt sein, dass der Vorspann-Axialabschnitt im unbelasteten Zustand gegenüber dem Trägerabschnitt in radialer Vorspannwirkungsrichtung vorsteht. Die Radialgleitdichtungsbaugruppe ist in der Regel zur Anbringung an ein Bauteil ausgebildet, mit welchem es gemeinsam relativ zu einem anderen Bauteil bewegbar sein soll.

In dem hier besonders angedachten Fall des Einsatzes der erfindungsgemäßen Radialgleitdichtungsbaugruppe in einer Dosiervorrichtung mit einer Kolben-Zylinder-Anordnung kann daher die Radialgleitdichtungsbaugruppe bezüglich eines der Bauteile aus Zylinder und Kolben bzw. Kolbenstange ortsfest an diesem vorgesehen sein und gemeinsam mit diesem relativ zum jeweils anderen Bauteil aus Zylinder und Kolben bzw. Kolbenstange beweglich sein.

Insbesondere dann, wenn die Radialfederabschnitte wenigstens zum Teil wie oben beschrieben blattfederartig ausgebildet sind, kann mit Hilfe der Radialfederabschnitte das Vorspannbauteil und damit die Radialgleitdichtungsbaugruppe insgesamt sehr einfach und vorteilhaft an einem die Radialgleitdichtungsbaugruppe ortsfest aufnehmenden Trägerbauteil verrastend angeordnet sein, wenn wenigstens ein Teil der Radialfederabschnitte auf ihrer im montierten Zustand von der Vorspannfläche wegweisenden Seite einen radialen Rastvorsprung aufweisen.

Insbesondere dann, wenn der Vorspann-Axialabschnitt, wie oben als vorteilhafte Weiterbildung der vorliegenden Erfindung geschildert, im unbelasteten Zustand gegenüber dem Trägerabschnitt in radialer Vorspannwirkungsrichtung vorsteht, kann das Vorspannbauteil durch die geschilderten radialen Rastvorsprünge an wenigstens einem Teil der Radialfederabschnitte, vorzugsweise an allen Radialfederabschnitten, auf einem Trägerbauteil, wie etwa einer mit einer Rastgegengeometrie versehenen Kolbenstange unter Ausnutzung der elastischen Radialbeweglichkeit der Radialfederabschnitte verrastend angeordnet werden, wobei die zur Lösung der Verrastung und damit zur Trennung von Vorspannbauteil und Trägerbauteil notwendige Kraft dann weiter erhöht wird, wenn im vollständig montierten Zustand die Vorspann-Axialabschnitte von der Arbeitsfläche zur Erzielung einer radialen Vorspannkraft entgegengesetzt zur gewünschten Wirkungsrichtung der radialen Vorspannkraft entgegen ihrer Material- oder/und Formelastizität gedrückt werden. Somit dient dann die radiale Vorspannkraft, mit welcher die Radialfederabschnitte den Dichtungsabschnitt des Dichtungsbauteils gegen die Arbeitsfläche drücken, gleichzeitig als Verrastungskraft des Vorspannbauteils an dem es tragenden Trägerbauteil.

Um zu gewährleisten, dass das Dichtungsbauteil und das Vorspannbauteil während des Betriebs der Radialgleitdichtungsbaugruppe im Wesentlichen ihre beabsichtigte axiale Relativstellung zueinander behalten, sich also nicht oder nur in vernachlässigbarer Weise relativ zueinander in axialer Richtung verlagern, kann vorgesehen sein, dass das Vorspannbauteil eine Sicherungseinrichtung zur Sicherung der Relativstellung von Dichtungsbauteil und Vorspannbauteil zumindest in axialer Richtung aufweist. Die Sicherung in axialer Richtung hat dabei Vorrang, da die Dichtungsfläche des Dichtungsbauteils auf jeden Fall in axialer Richtung relativ zur Arbeitsfläche, an der sie anliegt, relativ beweglich ist. Wie aus dem Stand der Technik bereits bekannt, kann die Sicherungseinrichtung als wenigstens ein Sicherungsvorsprung, vorzugsweise mehrere Sicherungsvorsprünge ausgebildet sein. Diese können zahnartig vom Vorspannbauteil in radialer Richtung, gegebenenfalls zum besseren Hintergreifen auch mit einer Komponente in axialer Richtung, vom Vorspannbauteil zum Dichtungsbauteil hin abstehen. Derartige Sicherungsvorsprünge können fertigungstechnisch vorteilhaft in Umfangsrichtung sich über die gesamte Länge des Vorspannbauteils erstrecken, also auch umlaufend am Vorspannbauteil ausgebildet sein.

Gemäß einer weiteren vorteilhaften Weiterbildung der vorliegenden Erfindung kann die Sicherungseinrichtung im Bereich des Vorspann-Axialabschnitts an einem oder mehreren Radialfederabschnitten vorgesehen sein, so dass die radiale Vorspannkraft, mit welcher der Radialfederabschnitt gegen das Dichtungsbauteil drückt, die Lagesicherheit von Dichtungsbauteil und Vorspannbauteil relativ zueinander erhöht.

Alternativ oder zusätzlich zur oben geschilderten Befestigung des Vorspannbauteils an einem Trägerbauteil kann zu diesem Zwecke vorgesehen sein, dass das Vorspannbauteil einen sich in radialer Richtung erstreckenden Befestigungsabschnitt aufweist zur Befestigung des Vorspannbauteils an einer übergeordneten Struktur, wie etwa einer Dosiervorrichtung. Die hier bezeichnete übergeordnete Struktur kann mit dem oben bezeichneten Trägerbauteil identisch sein. Der radiale Befestigungsabschnitt kann bei sehr geringer axialer Ausdehnung für einen äußerst sicheren Halt an der übergeordneten Struktur sorgen. Beispielsweise kann der Befestigungsabschnitt als Radialflansch ausgebildet sein, welcher sich vorteilhafterweise über die gesamte Umfangslänge des Vorspannbauteils erstreckt, besonders bevorzugt in Umfangsrichtung umlaufend vorgesehen ist.

Ein weiterer großer Nachteil der aus dem Stand der Technik bekannten gummielastischen Vorspannbauteile liegt in deren Temperaturverhalten. Das vorliegend definierte Vorspannbauteil kann in einem sehr großen Temperaturbereich, etwa bei Betriebstemperaturen bis zu 200°C, betriebssicher eingesetzt werden, wenn das Vorspannbauteil zumindest im Bereich der Radialfederabschnitte, vorzugsweise auch im Bereich des Federträgers aus Metall gebildet ist.

Das Dichtungsbauteil ist wenigstens im Dichtungsabschnitt, vorzugsweise vollständig aus einem weichelastischen Material, etwa einem Elastomer oder einem Thermoplast, gebildet.

Gemäß einer vorteilhaften Weiterbildung der vorliegenden Erfindung, welche insbesondere dann zur Anwendung kommen kann, wenn die Dichtungsfläche des Dichtungsbauteils mit besonders hoher Kraft bzw. Druck an die Arbeitsfläche angedrückt werden soll, kann die Radialgleitdichtungsbaugruppe ein relativ zum Vorspannbauteil beweglich vorgesehenes Spannkrafterzeugungsbauteil aufweisen. Das Spannkrafterzeugungsbauteil ist dabei vorzugsweise relativ zum Vorspannbauteil wenigstens beweglich zwischen einer ersten Stellung, in welcher das Spannkrafterzeugungsbauteil mit dem Vorspannbauteil derart zusammenwirkt, dass das Vorspannbauteil eine niedrigere radiale Vorspannkraft auf das Dichtungsbauteil ausübt, und einer zweiten Stellung, in welcher das Spannkrafterzeugungsbauteil derart mit dem Vorspannbauteil zusammenwirkt, dass das Vorspannbauteil eine höhere radiale Vorspannkraft auf das Dichtungsbauteil ausübt. Die Vorspannkraft der ersten Stellung kann auch Null sein.

Dabei kann für eine Bauraum sparende Anordnung das Spannkrafterzeugungsbauteil in einfacher Weise als ein das Vorspannbauteil wenigstens im Bereich von dessen Radialfederabschnitten umgebender Ring ausgebildet sein. Zur besseren Definition der durch das Spannkrafterzeugungsbauteil erzeugbaren Radialvorspannkraft ist an dem als Ring ausgebildeten Spannkrafterzeugungsbauteil vorzugsweise ein radialer Vorsprung ausgebildet, welcher vom Spannkrafterzeugungsbauteil zum Vorspannbauteil hin vorsteht.

Zur besonders einfachen Bedienung des Spannkrafterzeugungsbauteils kann weiter vorgesehen sein, dass wenigstens ein Teil der, vorzugsweise alle Radialfederabschnitte an ihrer von Dichtungsbaugruppe wegweisenden Seite in axialer Richtung geneigt ausgebildet sind, so dass eine axiale Verschiebung des als Ring ausgebildeten Spannkrafterzeugungsbauteils bei Kontakt mit der in axialer Richtung geneigten Seite der Radialfederabschnitte abhängig vom Verschiebeweg eine unterschiedlich große Radialvorspannkraft auf das Dichtungsbauteil bewirkt.

Weiterhin betrifft die vorliegende Erfindung eine Dosiervorrichtung, insbesondere eine Spritze, Pipettierkolben-Zylinder-Anordnung und dergleichen, mit einem Zylinder und einer Kolbenstange, welche sich beide längs einer axialen Richtung erstrecken und relativ zueinander in dieser axialen Richtung beweglich sind, sowie mit einer Radialgleitdichtungsbaugruppe wie sie oben geschildert ist. Dabei kann gemäß einer ersten möglichen Ausführungsform die Arbeitsfläche an einer zur Kolbenstange hinweisenden Innenseite des Zylinders ausgebildet sein. In diesem Falle kann die Radialgleitdichtungsbaugruppe zur Abdichtung eines Kolbens oder Kolbenstange gegenüber einem Zylinder verwendet werden, so dass das Dichtungsbauteil unmittelbar zur Begrenzung eines durch Relativbewegung von Kolbenstange und Zylinder veränderlichen Dosierhohlraums verwendet werden, wobei der Dosierhohlraum dann durch einen Abschnitt der Zylinderwand, eine Zylinderstirnseite mit einer Aus-/Einlassöffnung und eben dem Dichtungsbauteil begrenzt ist. Zumindest kann das Dichtungsbauteil zur Begrenzung des Dosierhohlraums beitragen.

Hierzu kann vorgesehen sein, dass das Vorspannbauteil im Bereich des in den Zylinder einragenden Dosierlängsendes der Kolbenstange an dieser zur gemeinsamen Bewegung befestigt ist. In diesem Falle kann der Dosierhohlraum mit einem größtmöglichen nutzbaren Volumen ausgebildet sein, wenn die Radialfederabschnitte, wie eingangs bereits angedeutet, vom Trägerabschnitt in Richtung vom Dosierhohlraum weg abstehend vorgesehen und angeordnet sind.

Zusätzlich oder alternativ zu der oben bereits geschilderten Möglichkeit der Verrastung des Vorspannbauteils am Kolben bzw. der Kolbenstange einer Dosiervorrichtung mit Kolben-Zylinder-Anordnung kann das Vorspannbauteil, insbesondere unter Verwendung des oben bezeichneten Radialflansches, mit der Kolbenstange vernietet sein. Zusätzlich oder alternativ kann ein Abschnitt des Vorspannbauteils dann, wenn dieses einen in Umfangsrichtung geschlossenen Ring bildet, auf die Kolbenstange bzw. den Kolben aufgeschrumpft sein. Auch in diesem Fall ist es aus Gründen optimaler Bauraumausnutzung vorteilhaft, wenn die Radialfederabschnitte in Richtung vom Dosierhohlraum weg vom Trägerabschnitt abstehend vorgesehen und angeordnet sind.

Falls eine weitere Verringerung der zur Bildung der hier beschriebenen Dosiervorrichtung notwendigen Bauteileanzahl gewünscht ist, kann auch daran gedacht sein, dass das Vorspannbauteil zumindest abschnittsweise, vorzugsweise vollständig einstückig mit einem Abschnitt der Kolbenstange ausgebildet ist.

Alternativ oder zusätzlich kann bei einer oben geschilderten Dosiervorrichtung die Arbeitsfläche auch an einer zur Zylinderinnenwand hinweisenden Außenseite der Kolbenstange ausgebildet sein. Diese ist beispielsweise dann wünschenswert, wenn mit der Radialgleitdichtungsbaugruppe nicht etwa der oben beschriebene Dosierhohlraum abgedichtet werden soll, sondem die Austrittsstelle der Kolbenstange aus dem Zylinder abgedichtet werden soll. In diesem Falle ist die erfindungsgemäße Radialgleitdichtungsbaugruppe an dem Längsende des Zylinders angeordnet, welches dem Zylinderlängsende mit der Dosieröffnung entgegengesetzt ist.

Die vorliegende Erfindung nachfolgend anhand von Ausführungsbeispielen in den beiliegenden Zeichnungen beschrieben werden. Es stellt dar:
- Fig. 1: eine Längsschnittansicht durch eine an einem Längsende einer nicht geschnittenen Kolbenstange angeordnete erste Ausführungsform einer erfindungsgemäßen Radialgleitdichtungsbaugruppe,
- Fig. 2: eine perspektivische, ungeschnittene Teil-Darstellung der ersten Ausführungsform von Figur 1,
- Fig. 3: eine Längsschnittansicht einer Dosiervorrichtung mit einer zweiten Ausführungsform einer erfindungsgemäßen Radialgleitdichtungsbaugruppe,
- Fig. 4: eine Längsschnittansicht des Details IV in Figur 3,
- Fig. 5: eine perspektivische Ansicht der an einer Kolbenstange vorgesehenen zweiten Ausführungsform einer Radialgleitdichtungsbaugruppe und
- Fig. 6: eine Längsschnittansicht einer Dosiervorrichtung mit einer dritten Ausführungsform einer erfindungsgemäßen Radialgleitdichtungsbaugruppe,
- Fig. 7: eine Längsschnittansicht einer Dosiervorrichtung mit einer vierten Ausführungsform einer erfindungsgemäßen Radialgleitdichtungsbaugruppe und
- Fig. 8: eine Längsschnittansicht einer Dosiervorrichtung mit einer fünften Ausführungsform einer erfindungsgemäßen Radialgleitdichtungsbaugruppe.

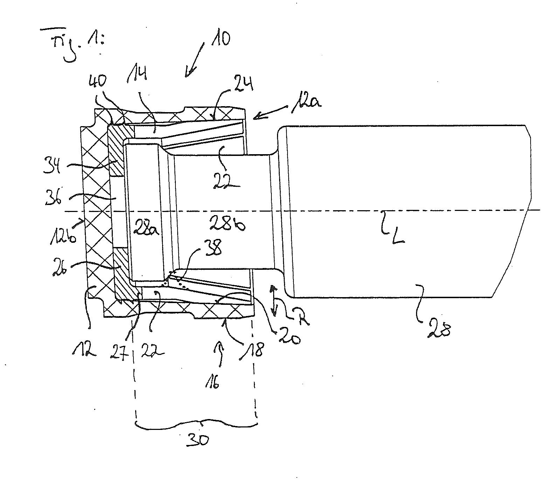

In Figur 1 ist eine im Längsschnitt dargestellte erste Ausführungsform einer erfindungsgemäßen Radialgleitdichtungsbaugruppe allgemein mit 10 bezeichnet. Diese umfasst ein topfförmiges Dichtungsbauteil 12, welches ein Vorspannbauteil 14 außen umgibt.

Das Dichtungsbauteil 12 weist im Bereich seines offenen Längsendes 12a einen Dichtungsabschnitt 16 auf, welcher auf seiner radial äußeren Seite eine in Umfangsrichtung umlaufende und sich eine vorbestimmte Strecke in axialer Richtung erstreckende Dichtungsfläche 18 aufweist, wobei im Bereich des Dichtungsabschnitts 16 auf der in radial entgegengesetzte Richtung weisenden Seite eine Vorspannfläche 20 ausgebildet ist, an welcher eine Mehrzahl von Radialfederabschnitten 22 mit je einem Vorspann-Axialabschnitt 24 anliegt.

Das Vorspannbauteil 14 weist neben den Radialfederabschnitten 22 einen Federträger 26 auf, mit dessen den Radialfederabschnitten in axialer Richtung nahe liegendem Trägerabschnitt 27 die Radialfederabschnitte 22 einstückig ausgebildet sind und in Richtung der Längsachse L der Kolbenstange 28 abstehen. Die Radialfederabschnitte 22, welche im Umfangsrichtung um die Längsachse L benachbart angeordnet sind, stehen allesamt in dieselbe Richtung vom Federträger 26 ab.

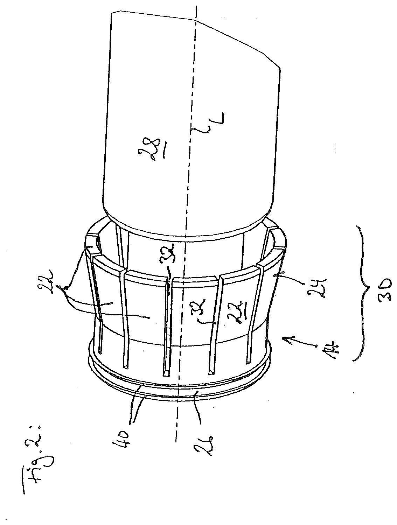

Wie in Figur 2 besser zu erkennen ist, ist das Vorspannbauteil 14 kronenartig ausgebildet, mit einem rohrartigen Abschnitt 30, in welchem die Radialfederabschnitte 22 durch Schlitze 32 voneinander getrennt sind, deren axiale Länge kürzer ist als jene des rohrartigen Abschnitts 30, so dass der rohrartige Abschnitt 30 ausgehend von einem rohrförmigen Halbzeug durch Einbringen der Schlitze 32 gebildet werden kann.

Das Vorspannbauteil 14 weist überdies einen nach radial innen gerichteten Radialflansch 34 auf, welcher zur Befestigung des Vorspannbauteils an ein im montierten Zustand in einen Zylinder einragendes Längsende 28a der Kolbenstange 28 dient. Hierzu ist eine im Wesentlichen zentrale Öffnung 36 am Radialflansch 34 vorgesehen, mit welcher das Vorspannbauteil 14 an das Längsende 28a der Kolbenstange 28 angenietet werden kann.

Zusätzlich kann an der in radialer Richtung von der Vorspannfläche 20 wegweisenden Seite der Radialfederabschnitte 22 ein mit punktierter Linie angedeuteter Radialvorsprung 38 vorgesehen sein, welcher zur Verrastung des Vorspannbauteils 14 an einem als Rastkopf ausgebildeten Längsende 28a der Kolbenstange 28 dienen kann.

Die Radialfederabschnitte 22 sind zur Erzeugung einer in Figur 1 nach radial außen wirkenden Vorspannkraft mit ihrem freien Längsende in radialer Richtung (s. Doppelpfeil R) bezogen auf die zentrale Längsachse L der Kolbenstange 28 federnd am Federträger 26 vorgesehen.

Im montierten Zustand ist, wie bereits oben gesagt, das Längsende 28a der Kolbenstange 28, welches zur oben ebenfalls geschilderten Verrastungsmöglichkeit des Vorspannbauteils 14 daran mit einem größeren Durchmesser ausgebildet ist als der axial folgende Absatzabschnitt 28b, dauerhaft in das Innere eines nicht dargestellten Dosiervorrichtungszylinders eingesetzt. Die Stirnseite 12b des elastomeren Dichtungsbauteils 12 begrenzt dabei einen Dosierhohlraum der Dosiervorrichtung.

Zur Lagesicherung des Dosierbauteils 12 am Vorspannbauteil 14 sind in Umfangsrichtung umlaufende Vorsprünge 40 am Vorspannbauteil 14, hier im Bereich des Federträgers 26, vorgesehen. Diese dringen im montierten Zustand von Figur 1 in den elastomeren Werkstoff des Dichtungsbauteils 12 ein.

Diese Lagesicherungswirkung kann auch dadurch verstärkt werden, dass alternativ oder zusätzlich weitere Sicherungselemente im Bereich des Vorspann-Axialabschnitts 16 auf der im montierten Zustand zum Dichtungsbauteil 12 hinweisenden Seite der Radialfederabschnitte 22 vorgesehen sind.

In Figur 2 ist die in Figur 1 dargestellte Ausführungsform der Radialgleitdichtungsbaugruppe 10 perspektivisch und ohne Dichtungsbauteil 12 dargestellt.

Dabei ist zu erkennen, dass die Vorspann-Axialabschnitte 24 der Radialfederabschnitte 22 im unverformten Zustand der Figur 2 radial in Vorspannwirkungsrichtung, d.h. hier nach radial außen, über den Außendurchmesser des Federträgers 26 hinaus vorstehen.

Dann, wenn das Dichtungsbauteil 12 zumindest mit seinem Dichtungsabschnitt 16 über den Vorspann-Axialabschnitt des Vorspannbauteils 14 gestülpt wird, werden die Radialfederabschnitte 22 gegen ihre Materialelastizität nach radial innen gebogen und drücken mit entsprechend genau einstellbarer Federkraft (Vorspannkraft) nach radial außen gegen die Vorspannfläche 20, wodurch die Dichtungsfläche 18 des Dichtungsbauteils 12 in gewünschter Weise nach radial außen vorgespannt ist.

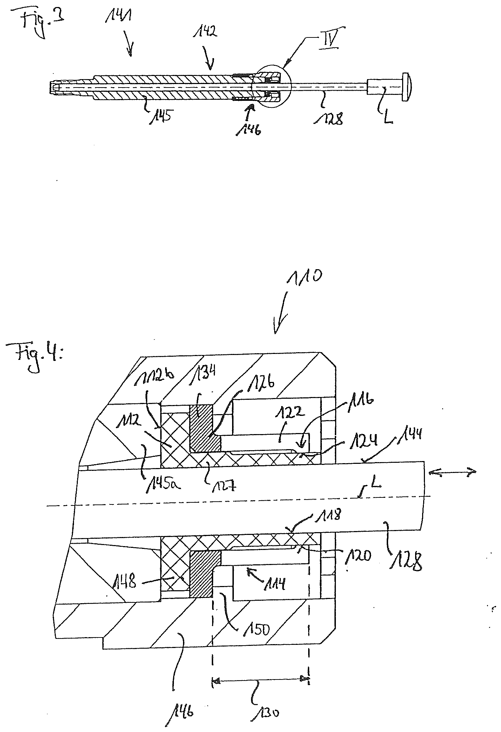

In Figur 3 ist eine zweite Ausführungsform einer erfindungsgemäßen Radialgleitdichtungsbaugruppe im montierten Zustand in einer Dosiervorrichtung dargestellt.

Gleiche Bauteile wie in der ersten Ausführungsform der Figuren 1 und 2 sind in der zweiten Ausführungsform der Figuren 3 bis 5 mit gleichen Bezugszeichen versehen, jedoch erhöht um die Zahl 100. Die zweite Ausführungsform wird nur insofern erläutert, als sie sich von der ersten Ausführungsform unterscheidet, auf deren Beschreibung ansonsten ausdrücklich verwiesen wird.

In Figur 3 ist eine Dosiervorrichtung allgemein mit 141 bezeichnet. Diese umfasst einen Zylinder 142, in welchem eine Kolbenstange 128 relativ zu diesem längs der Kolbenstangenlängsachse L beweglich aufgenommen ist.

Die Kolbenstangenlängsachse L ist gleichzeitig auch die Längsachse des Zylinders 142.

Der Zylinder 142 ist mehrteilig ausgeführt mit einem Zylinderhauptkörper 145 und einer Verschluss- und Montagebaugruppe 146, welche an der Austrittsseite der Kolbenstange 128 aus dem Zylinder 142 mit dem Zylinderhauptkörper 145 verbunden ist. In Figur 4 ist zu erkennen, dass die Arbeitsfläche 144, durch die Außenfläche der Kolbenstange 128 gebildet ist, an welcher somit die nach radial innen, also auf die Kolbenstangenlängsachse L zuweisende Dichtungsfläche 118 des Dichtungsbauteils 112 anliegt.

Folglich weist die Vorspannfläche 120 des Dichtungsbauteils 112 der zweiten Ausführungsform nach radial außen. Die Radialfederabschnitte 122 liegen mit ihrem Vorspann-Axialabschnitt 124 an der Vorspannfläche 120 des Dichtungsbauteils 112 an und drücken den Dichtungsabschnitt 116 des Dichtungsbauteils 112 an die Arbeitsfläche 144 an.

Die von der Radialgleitdichtungsbaugruppe 110 der zweiten Ausführungsform ausgeübte Vorspannkraft wirkt also, verglichen mit der ersten Ausführungsform, in die radial entgegengesetzte Richtung.

Dementsprechend ist das Vorspannbauteil 114 mit einem nach radial außen weisenden Befestigungsflansch 134 versehen. Gleiches gilt für das Dichtungsbauteil 112, dessen Stirnfläche 112b an einem nach radial außen verlaufenden umlaufenden Halteflansch 148 ausgebildet ist.

Die Radialgleitdichtungsbaugruppe der zweiten Ausführungsform lässt sich sehr einfach sandwichartig an der Dosiervorrichtung 141 befestigen, indem der radiale Befestigungsflansch 134 in einer axialen Richtung, hier in die Auszugsrichtung der Kolbenstange 128 aus dem Zylinder 142, gegen einen nach radial innen vorstehenden Radialvorsprung 150 der Verschluss- und Montagebaugruppe 146 angelegt wird. In der entgegengesetzten axialen Richtung ist der Halteflansch 148, welcher zusammen mit dem restlichen einstückigen Dichtungsbauteil 112 aus elastomerem Material hergestellt ist, an den Befestigungsflansch 134 angelegt, so dass diese Flanschanordnung durch ein Axialende 145a des Zylinderhauptkörpers 145 gegen den Radialvorsprung 150 fixierbar und verspannbar ist. Die Fixierung kann beispielsweise in einfacher Weise durch Aufschrauben der Verschluss- und Montagebaugruppe 146 auf den Zylinderhauptkörper erfolgen, wobei durch die weichelastischen Eigenschaften des elastomeren Dichtungsbauteilmaterials nicht nur eine Fixierung von Dichtungsbauteil 112 und Vorspannbauteil 114 an der Dosiervorrichtung 141 erreicht wird, sondern aufgrund des Prinzips "actio = reactio" auch eine Sicherung der Verschluss- und Montagebaugruppe 146 an dem Zylinderhauptkörper 145 erreicht wird.

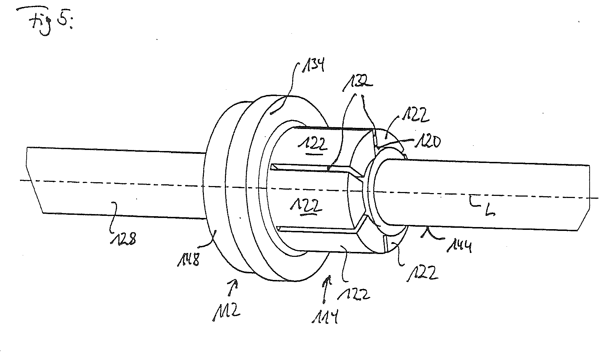

Die Figur 5 zeigt die zweite Ausführungsform ohne den Zylinder 142 im Teilschnitt in perspektivischer Darstellung.

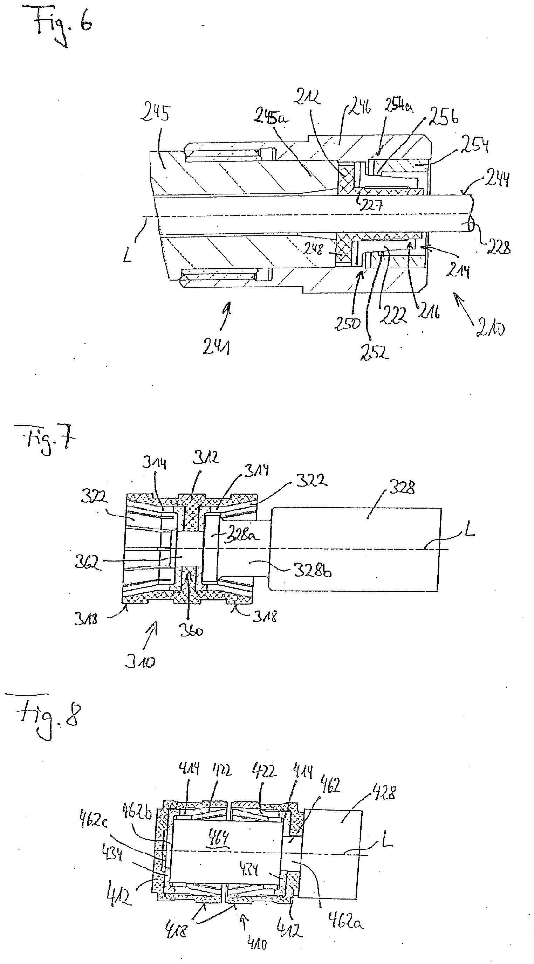

In Figur 6 ist eine Dosiervorrichtung mit einer dritten Ausführungsform einer erfindungsgemäßen Radialgleitdichtungsbaugruppe dargestellt. Gleiche Bauteile wie in der zweiten Ausführungsform der Figuren 4 und 5 sind in Figur 6 mit gleichen Bezugszeichen versehen, jedoch erhöht um die Zahl 100. Ansonsten wird auf die Beschreibung der Figuren 4 und 5 ausdrücklich verwiesen.

Da die dritte Ausführungsform der Figur 6 der zweiten Ausführungsform im Wesentlichen entspricht, wird diese nur insoweit beschrieben werden, als sie sich von der bereits beschriebenen zweiten Ausführungsform unterscheidet.

Der Unterschied der dritten Ausführungsform der Radialgleitdichtungsbaugruppe im Vergleich zur zweiten Ausführungsform besteht zum einen darin, dass die vom Dichtungsbauteil 212 wegweisende Radialfläche 252 der Radialfederabschnitte 222 zur Längsachse L der Kolbenstange 228 geneigt ausgebildet ist. In dem in Figur 6 gezeigten Beispiel ist die äußere Radialfläche 252 konisch ausgebildet, wobei der Außendurchmesser der von den Radialfederabschnitten 222 gebildeten Baugruppe zum Zylinderhauptkörper 245 hin zunimmt.

Weiterhin ist das Vorspannbauteil 214 Bereich der Radialfederabschnitte 222 radial außen von einem Spannring 254 umgeben, an dessen tiefer in der Dosiervorrichtung 241 liegenden Längsende 254a ein zur äußeren Radialfläche 252 der Radialfederabschnitte 222 hinweisender Radialvorsprung 256 ausgebildet ist.

Der Spannring 254 ist in Richtung der Längsachse L der Kolbenstange 228 zumindest bei der Montage der Dosiervorrichtung 241 beweglich. Wird der Spannring 254 in die Dosiervorrichtung hinein geschoben, d.h. in Figur 6 nach links verschoben, kommt der Radialvorsprung 256 in Anlage an die konische Radialfläche 252 der Radialfederabschnitte 222, so dass durch weiteres Verschieben des Spannrings 254 in die Dosiervorrichtung 241 hinein die Radialfederabschnitte 222 durch den Radialvorsprung 256 zunehmend zur Kolbenstange 228 hin gedrückt werden, wodurch die von den Radialfederabschnitten 222 auf die Dichtungsbaugruppe 212 ausgeübte radiale Vorspannkraft erhöht wird.

Der Spannring 254 oder allgemein ein Spannkrafterzeugungsbauteil kann dann, wenn durch das Spannkrafterzeugungsbauteil eine gewünschte radiale Vorspannkraft erreicht wurde, in seiner Lage relativ zum Vorspannbauteil festgelegt werden, beispielsweise durch Verkleben, Verschweißen und dergleichen, um die dauerhafte Ausübung der radialen Vorspannkraft auf das Dichtungsbauteil zu sichern.

In Figur 7 ist eine Längsschnittansicht durch eine der ersten Ausführungsform ähnlichen vierten Ausführungsform einer erfindungsgemäßen Radialgleitdichtungsbaugruppe gezeigt, welche an einer Kolbenstange angeordnet ist.

Gleiche Bauteile wie in Figur 1 sind mit gleichen Bezugszeichen versehen, jedoch erhöht um die Zahl 300.

Die vierte Ausführungsform der Figur 7 wird nur insofern erläutert, als sie sich von der ersten Ausführungsform der Figuren 1 und 2 unterscheidet, auf deren Beschreibung hiermit ausdrücklich verwiesen wird.

Das Vorspannbauteil 314 in Figur 7 ist jenem Vorspannbauteil 14 der Figur 1 völlig identisch, jedoch ist das Dichtungsbauteil 312, dass es zwei Vorspannbauteile 314 in entgegengesetzter axialer Orientierung aufzunehmen vermag. Diese Anordnung von Vorspannbauteilen 314 wird auch als X-Anordnung bezeichnet, da im Längsschnitt von Figur 7 betrachtet die Radialfederabschnitte 322 der beiden Vorspannbauteile 314 derart angeordnet und ausgerichtet sind, dass sie sich ausgehend von der Befestigungsstelle 360 mit dem Niet 362 in beide axiale Richtungen von der Längsachse L der Kolbenstange 328 weg erstrecken.

Mit der in Figur 7 gezeigten Darstellung kann eine in axialer Richtung sehr lange Dichtungsstrecke des Dichtungsbauteils 312 an einer Figur 7 nicht dargestellten Arbeitsfläche erzielt werden.

In Figur 8 ist wiederum eine Radialgleitdichtungsbaugruppe an einer Kolbenstange im Längsschnitt dargestellt. Auch die Komponenten dieser Radialgleitdichtungsbaugruppe der fünften Ausführungsform haben große Ähnlichkeit mit jenen der ersten bzw. vierten Ausführungsform. Daher sind gleiche Bauteile in der fünften Ausführungsform mit gleichen Bezugszeichen versehen wie in den Figuren 1, 2 und 7, jedoch erhöht um die Zahlen 400, bzw. 100. Ansonsten wird ausdrücklich auf die Beschreibung der ersten bzw. vierten Ausführungsform verwiesen.

Die fünfte Ausführungsform der Figur 8 wird im Folgenden nur insofern erläutert werden, als sie sich von den bereits beschriebenen Ausführungsformen 1 und 4 unterscheidet.

Auch die fünfte Ausführungsform der Figur 8 zeigt eine Radialgleitdichtungsbaugruppe mit zwei Vorspannbauteilen 414, welche mit den Vorspannbauteilen 14 bzw. 314 der ersten und vierten Ausführungsform völlig identisch sind.

Im Gegensatz zu der vierten Ausführungsform der Figur 7 sind die Vorspannbauteile 414 und damit verbunden die Dichtungsbauteile 412 nicht mit ihren Stirnseiten benachbart angeordnet, sondern mit freien Längsenden ihrer Radialfederabschnitte 422. Ausgehend von diesen nahe beieinander liegenden freien Längsenden der Radialfederabschnitte 422 erstrecken sich beide Radialfederabschnitte in axialer Richtung jeweils zur Längsachse L der Kolbenstange 428 hin, weshalb die in Figur 8 dargestellte Anordnung auch als "O-Anordnung" bezeichnet wird. Der Niet 462 ist dementsprechend länger ausgebildet, wobei zwischen den Stirnseiten (Radialflansche 434) der Vorspannbauteile 414 eine Hülse 464 aufgeschoben ist, welche der Fixierung des in Figur 8 rechten Vorspannbauteils 414 mittels des linken Vorspannbauteils 414 und des Nietkopfes 462c dient. Von der Hülse 464 nicht umschlossen sind lediglich die Abschnitte des Niets 462, die von den Radialflanschen 434 und im Falle der rechten Dichtungsbaugruppe 412 noch von dessen Dichtungsmaterial umgeben sind. Diese Abschnitte sind in Figur 8 mit 462a und 462b bezeichnet.

Auch mit der in Figur 8 dargestellten fünften Ausführungsform wird eine in axialer Richtung sehr lange dichtende Fläche erzielt.

## Patentansprüche

1. Dosiervorrichtung mit einer Kolben-Zylinder-Anordnung mit einem Zylinder (142) und einer Kolbenstange (128; 228), welche sich beide längs einer axialen Richtung erstrecken und relativ zueinander in dieser Richtung beweglich sind, und mit einer einen Radialspalt zwischen einer Wandung des Zylinders (142) und einer Wandung der relativ zum Zylinder (142) beweglichen Kolbenstange (128; 228) abdichtenden Radialgleitdichtungsbaugruppe (110; 210), welche ein Dichtungsbauteil (112; 212) und wenigstens ein mit diesem zusammenwirkendes Vorspannbauteil (114; 214) aufweist, wobei das Dichtungsbauteil (112; 212) einen sich in axialer Richtung und in Umfangsrichtung erstreckenden, vorzugsweise in Umfangsrichtung umlaufenden Dichtungsabschnitt (116; 216) aufweist, an welchem eine in eine erste radiale Richtung weisende Dichtungsfläche (118) zur dichtenden und zumindest in axialer Richtung gleitenden Anlage an eine sich in axialer Richtung und in Umfangsrichtung erstreckende, vorzugsweise in Umfangsrichtung umlaufende Arbeitsfläche (144; 244) ausgebildet ist, und an welchem eine in eine zweite, zur ersten entgegengesetzten radiale Richtung weisende Vorspannfläche (120) zum Radialvorspannkraft übertragenden Eingriff mit dem Vorspannbauteil (114; 214) ausgebildet ist, **dadurch gekennzeichnet, dass** das Vorspannbauteil (114; 214) einen Federträger (126) sowie eine Mehrzahl von gesondert ausgebildeten Radialfederabschnitten (122; 222) aufweist, welche zumindest in radialer Richtung federnd an dem Federträger (126) abgestützt sind, und dass die Arbeitsfläche (144; 244) an einer zur Zylinderinnenwand hinweisenden Außenseite der Kolbenstange (128; 228) ausgebildet ist.

2. Dosiervorrichtung (141; 241) nach Anspruch 1,
**dadurch gekennzeichnet, dass** es ein relativ zum Vorspannbauteil (114; 214) beweglich vorgesehenes Spannkrafterzeugungsbauteil (254) aufweist, welches relativ zum Vorspannbauteil (114; 214) wenigstens beweglich ist zwischen einer ersten Stellung, in welcher das Spannkrafterzeugungsbauteil (254) mit dem Vorspannbauteil (114; 214) derart zusammenwirkt, dass das Vorspannbauteil (114; 214) eine niedrigere radiale Vorspannkraft auf das Dichtungsbauteil ausübt, und einer zweiten Stellung, in welcher das Spannkrafterzeugungsbauteil (254) derart mit dem Vorspannbauteil (114; 214) zusammenwirkt, dass das Vorspannbauteil (114; 214) eine höhere radiale Vorspannkraft auf das Dichtungsbauteil ausübt.

3. Dosiervorrichtung (141; 241), nach Anspruch 1 oder Anspruch 2,
**dadurch gekennzeichnet, dass** sie eine Spritze oder eine Pipettierkolben-Zylinder-Anordnung ist.

4. Dosiervorrichtung nach einem der vorhergehenden Ansprüche,
**dadurch gekennzeichnet, dass** wenigstens ein Radialfederabschnitt (122; 222) im Bereich seines einen Axiallängsendes mit dem Federträger (126) verbunden ist und mit einem mit axialem Abstand zu dem Axiallängsende vorgesehenem Vorspann-Axialabschnitt (124) zur Anlage an die Vorspannfläche (120) ausgebildet ist.

5. Dosiervorrichtung nach Anspruch 4,
**dadurch gekennzeichnet, dass** der Federträger (126) einen sich in Umfangsrichtung erstreckenden, vorzugsweise vollständig umlaufenden Trägerabschnitt (127; 227) aufweist, von welchem wenigstens ein Radialfederabschnitt (122; 222), vorzugsweise mehrere, besonders bevorzugt alle Radialfederabschnitte (122; 222) in axialer Richtung, vorzugsweise in dieselbe axiale Richtung abstehen.

6. Dosiervorrichtung nach einem der vorhergehenden Ansprüche,
**dadurch gekennzeichnet, dass** die Radialfederabschnitte (122; 222) in Umfangsrichtung benachbart angeordnet sind.

7. Dosiervorrichtung nach Anspruch 5 oder nach Anspruch 6 unter Einbeziehung des Anspruchs 5,
**dadurch gekennzeichnet, dass** wenigstens ein Teil der, vorzugsweise alle Radialfederabschnitte (122; 222) einstückig mit dem Trägerabschnitt (127; 227) ausgebildet ist bzw. sind.

8. Dosiervorrichtung nach Anspruch 7,
**dadurch gekennzeichnet, dass** das Vorspannbauteil (114; 214) ein einstückiges Bauteil ist.

9. Dosiervorrichtung nach einem der vorhergehenden Ansprüche,
**dadurch gekennzeichnet, dass** das Vorspannbauteil (114; 214) einen rohrförmigen Abschnitt (130) aufweist, welcher eine Mehrzahl von in Umfangsrichtung benachbarten axialen Schlitzen (132) aufweist, deren axiale Länge kürzer ist als jene des rohrförmigen Abschnitts (130), und welche vorzugsweise von einem axialen Längsende des rohrförmigen Abschnitts (130) ausgehend zum jeweils anderen axialen Längsende des rohrförmigen Abschnitts (130) hin verlaufen.

10. Dosiervorrichtung nach einem der Ansprüche 4 bis 9 unter Einbeziehung der Ansprüche 4 und 5,
**dadurch gekennzeichnet, dass** der Vorspann-Axialabschnitt (124) im unbelasteten Zustand gegenüber dem Trägerabschnitt (127; 227) in radialer Vorspannwirkungsrichtung vorsteht.

11. Dosiervorrichtung nach einem der vorhergehenden Ansprüche,
**dadurch gekennzeichnet, dass** wenigstens ein Teil der Radialfederabschnitte (122; 222) auf ihrer im montierten Zustand von der Vorspannfläche (120) wegweisenden Seite einen radialen Rastvorsprung aufweisen.

12. Dosiervorrichtung nach einem der vorhergehenden Ansprüche,
**dadurch gekennzeichnet, dass** das Vorspannbauteil (114; 214) eine Sicherungseinrichtung zur Sicherung der Relativstellung von Dichtungsbauteil (112; 212) und Vorspannbauteil (114; 214) zumindest in axialer Richtung aufweist, vorzugsweise in Form von Sicherungsvorsprüngen.

13. Dosiervorrichtung nach einem der vorhergehenden Ansprüche,
**dadurch gekennzeichnet, dass** das Vorspannbauteil (114; 214) einen sich in radialer Richtung erstreckenden Befestigungsabschnitt (134) aufweist zur Befestigung des Vorspannbauteils (114; 214) an einer übergeordneten Struktur (141; 241), wie etwa einer Dosiervorrichtung.

14. Dosiervorrichtung nach Anspruch 13,
**dadurch gekennzeichnet, dass** der Befestigungsabschnitt (134) als, vorzugsweise umlaufender, Radialflansch (134) ausgebildet ist.

15. Dosiervorrichtung nach einem der vorhergehenden Ansprüche,
**dadurch gekennzeichnet, dass** das Vorspannbauteil (114; 214) zumindest im Bereich der Radialfederabschnitte (122; 222), vorzugsweise auch im Bereich des Federträgers (126) aus Metall gebildet ist.

16. Dosiervorrichtung nach einem der vorhergehenden Ansprüche unter Einbeziehung des Anspruchs 2,
**dadurch gekennzeichnet, dass** das Spannkrafterzeugungsbauteil (254) als ein das Vorspannbauteil (114; 214) wenigstens im Bereich von dessen Radialfederabschnitten (122; 222) umgebender Ring ausgebildet ist.

17. Dosiervorrichtung nach Anspruch 16,
**dadurch gekennzeichnet, dass** an dem als Ring ausgebildeten Spannkrafterzeugungsbauteil (254) ein radialer Vorsprung (256) ausgebildet ist, welcher vom Spannkrafterzeugungsbauteil (254) zum Vorspannbauteil (114; 214) hin vorsteht.

18. Dosiervorrichtung nach Anspruch 16 oder 17,
**dadurch gekennzeichnet, dass** wenigstens ein Teil der, vorzugsweise alle Radialfederabschnitte (122; 222) an ihrer von der Dichtungsbaugruppe (112; 212) wegweisenden Seite in axialer Richtung geneigt ausgebildet sind.

## Claims

1. Metering device with a piston-cylinder arrangement with a cylinder (142) and a piston rod (128; 228), both of which extend along an axial direction and are movable relative to one another in this direction, and with a radial sliding seal subassembly (110; 210) sealing a radial gap between a wall of the cylinder (142) and a wall of the piston rod (128; 228) movable relative to the cylinder (142), which subassembly comprises a sealing component (112; 212) and at least one pretensioning component (114; 214) co-operating therewith, wherein the sealing component (112; 212) comprises a sealing section (116; 216) extending in the axial direction and in the circumferential direction, preferably extending entirely around in the circumferential direction, on which a sealing surface (118) facing in a first radial direction is formed for sealing and for sliding contact on a working surface (144; 244) at least in the axial direction, said working surface (144; 244) extending in the axial direction and in the circumferential direction, preferably extending entirely around in the circumferential direction, and on which a pretensioning surface (120) facing in a second radial direction opposite to the first radial direction is formed, for a radial pretensioning force transferring engagement with the pretensioning component (114; 214),
**characterized in that** the pretensioning component (114; 214) comprises a spring carrier (126) as well as a plurality of separately formed radial spring segments (122; 222) that are at least in the radial direction resiliently supported on the spring carrier (126), and **in that** the working surface (144; 244) is formed on the side of the piston rod (128; 228), facing towards the inner wall of the cylinder.

2. The metering device (141; 241) according to claim 1,
**characterized in that** it comprises a clamping force generating component (254) movable relative to the pretensioning component (114; 214), which is at least movable relative to the pretensioning component (114; 214) between a first position, in which the clamping force generating component (254) co-operates with the pretensioning component (114; 214) in such a way that the pretensioning component (114; 214) exerts a lower radial pretensioning force on the sealing component, and a second position, in which the clamping force generating component (254) co-operates with the pretensioning component (114; 214) in such a way that the pretensioning component (114; 214) exerts a higher radial pretensioning force on the sealing component.

3. The metering device according to claim 1 or claim 2,
**characterized in that** it is a syringe or a pipetting piston cylinder arrangement.

4. The metering device according to one of the preceding claims, **characterized in that** at least one radial spring segment (122; 222) is connected in the region of one of its axial longitudinal ends to the spring carrier (126) and is formed with a pretensioning axial section (124) axially interspaced from the axial longitudinal end, for contact on the pretensioning surface (120).

5. The metering device according to claim 4,
**characterized in that** the spring carrier (126) comprises a carrier section (127; 227) extending in the circumferential direction, preferably extending all the way around in the circumferential direction, from which at least one radial spring segment (122; 222), preferably a plurality of radial spring segments (122; 222), more preferably all radial spring elements (122; 222) project in an axial direction, preferably in the same axial direction.

6. The metering device according to one of the preceding claims,
**characterized in that** the radial spring segments (122; 222) are arranged adjacently in the circumferential direction.

7. The metering device according to claim 5 or according to claims 5 and 6, wherein at least a part of the radial spring segments (122; 222) is or preferably all radial spring segments (122; 222) are formed in one piece with the carrier section (127; 227).

8. The metering device according to claim 7,
**characterized in that** the pretensioning component (114; 214) is a one-piece component.

9. The metering device according to one of the preceding claims,
**characterized in that** the pretensioning component (114; 214) comprises a tubular section (130) which has a plurality of axial slits (132) adjacent in the circumferential direction, whose axial length is shorter than that of the tubular section (130), which axial slits (132) preferably run starting from one axial longitudinal end of the tubular section (130) to the respective other axial longitudinal end of the tubular section (130).

10. The metering device according to one of claims 4 to 9, including claims 4 and 5,
**characterized in that** the pretensioning axial section (124) in the unloaded state projects in the radial pretensioning action direction with respect to the carrier section (127; 227).

11. The metering device according to one of the preceding claims,
**characterized in that** at least a part of the radial spring segments (122; 222) has a radial snap-lock projection on its side facing away from the pretensioning surface (120) in the installed state.

12. The metering device according to one of the preceding claims,
**characterized in that** the pretensioning component (114; 214) comprises a securement device, preferably in the form of securement projections, for securing the relative position of the sealing component (112; 212) and pretensioning component (114; 214) at least in the axial direction.

13. The metering device according to one of the preceding claims,
**characterized in that** the pretensioning component (114; 214) comprises a fastening section (134) extending in the radial direction, for fastening the pretensioning component (114; 214) to a principal structure (141; 241), as e. g. a dosing device.

14. The metering device according to claim 13,
**characterized in that** the fastening section (134) is formed as a, preferably circumferentially extending, radial flange (134).

15. The metering device according to one of the preceding claims,
**characterized in that** the pretensioning component (114; 214) at least in the region of the radial spring segments (122; 222), preferably also in the region of the spring carrier (126), is formed of metal.

16. The metering device according to one of the preceding claims, including claim 2,
**characterized in that** the clamping force generating component (254) is formed as a ring that surrounds the pretensioning component (114; 214) at least in the region of its radial spring segments (122; 222).

17. The metering device according to claim 16,
**characterized in that** a radial projection (256) is formed on the clamping force generating component (254) formed as a ring, which projects from the clamping force generating component (254) to the pretensioning component (114; 214).

18. The metering device according to claim 16 or 17,
**characterized in that** at least a part of, preferably all the radial spring segments (122; 222) on their side facing away from the sealing component (112; 212) are formed inclined in the axial direction.

## Revendications

1. Dispositif de dosage avec une assemblée piston-cylindre avec un cylindre (142) et une tige de piston (128; 228) qui s'étendent tous les deux dans un sens axial et sont mobiles dans ce sens l'un par rapport à l'autre, et avec une assemblée de joint d'étanchéité coulissant radial (110; 210) fermant une fente radiale entre une paroi du cylindre (142) et une paroi de la tige de piston (128; 228) mobile par rapport au cylindre, comprenant un composant de joint d'étanchéité (112; 212) et au moins un composant de précontrainte (114; 214) coopérant avec ce dernier, le composant de joint d'étanchéité (112; 212) comprenant une section de joint d'étanchéité (116; 216) s'étendant dans un sens axial et dans un sens circonférentiel, de préférence périphérique dans le sens circonférentiel, où une surface d'étanchéité (118) est formée, orientée dans un premier sens radial, pour un appui d'étanchéité coulissant dans au moins le sens axial à une surface de travail (144; 244) qui s'étend dans le sens axial et dans le sens circonférentiel, de préférence périphérique dans le sens circonférentiel, et où une deuxième surface de précontrainte (120) est formée, orientée dans un deuxième sens radial opposé au premier sens, pour être engagé avec le composant de précontrainte (114; 214) transmettant une force de précontrainte radiale,
**caractérisé en ce que** le composant de précontrainte (114; 214) comprend un support de ressort (126) ainsi qu'une pluralité des sections de ressort radial (122; 222) formées séparément, qui au moins dans un sens radial sont supportées de manière élastique au support de ressort (126), et
**en ce que** la surface de travail (144; 244) est formée à un côté extérieur de la tige de piston (128; 228) dirigé vers la paroi intérieur du cylindre.

2. Dispositif de dosage (141; 241) selon la revendication 1,
**caractérisé en ce qu'**il comprend un comprend un composant de génération de force de serrage (254) mobile par rapport au composant de précontrainte (114; 214) qui, par rapport au composant de précontrainte (114; 214), est mobile au moins entre une première position, où le composant de génération de force de serrage (254) coopère avec le composant de précontrainte (114; 214) de façon que le composant de précontrainte (114; 214) applique une plus faible force de précontrainte radiale sur le composant de joint d'étanchéité, et une deuxième position, où le composant de génération de force de serrage (254) coopère avec le composant de précontrainte (114; 214) de façon à ce que le composant de précontrainte (114; 214) applique une plus grande force de précontrainte radiale sur le composant de joint d'étanchéité.

3. Dispositif de dosage (141; 241) selon la revendication 1 ou la revendication 2,
**caractérisé en ce qu'**il est une seringue ou une assemblée piston de pipetage-cylindre.

4. Dispositif de dosage selon une des revendications précédentes,
**caractérisé en ce qu'**au moins une partie des sections de ressort radial (122; 222) est dans la région de son une extrémité longitudinale axiale liée au support de ressort (126) et est formée avec une section de précontrainte axiale (124) prévue avec une distance axiale à l'extrémité longitudinale axiale pour un appui contre la surface de précontrainte (120).

5. Dispositif de dosage selon la revendication 4,
**caractérisé en ce que** le support de ressort (126) comprend une section de support (127; 227) s'étendant dans le sens circonférentiel, de préférence sur tout le pourtour, d'où projettent au moins une section de ressort radial (122; 222), de préférence plusieurs, de manière encore plus préférée toutes les sections de ressort radial (122; 222) dans un sens axial, de préférence dans le même sens axial.

6. Dispositif de dosage selon une des revendications précédentes,
**caractérisé en ce que** les sections de ressort radial (122; 222) sont arrangées de manière adjacente dans le sens circonférentiel.

7. Dispositif de dosage selon la revendication 5 ou la revendication 6 prenant en considération la revendication 5,
**caractérisé en ce qu'**au moins une partie des sections de ressort radial (122; 222), de préférence toutes les sections de ressort radial sont formées en une pièce avec la section de support (127; 227).

8. Dispositif de dosage selon la revendication 7,
**caractérisé en ce que** le composant de précontrainte (114; 214) est un composant en une pièce.

9. Dispositif de dosage selon une des revendications précédentes,
**caractérisé en ce que** le composant de précontrainte (114; 214) comprend une section tubulaire (130) comprenant une pluralité de fentes axiales (132) adjacentes dans le sens circonférentiel, dont la longueur axiale est plus courte que celle de la section tubulaire (130) et qui s'étendent de préférence d'une extrémité longitudinale axiale de la section tubulaire (130) à l'autre extrémité longitudinale axiale respective de la section tubulaire (130).

10. Dispositif de dosage selon une des revendications 4 à 9 en prenant en considération les revendications 4 et 5,
**caractérisé en ce que** dans l'état non soumis à une contrainte la section de précontrainte axiale (124) fait saillie par rapport à la section de support (127; 227) dans le sens radial de l'effet de précontrainte.

11. Dispositif de dosage selon une des revendications précédentes,
**caractérisé en ce qu'**au moins une partie des sections de ressort radial (122; 222) comprennent une saillie d'arrêt radiale sur la face orientée à l'opposé de la surface de précontrainte (120) dans l'état monté.

12. Dispositif de dosage selon une des revendications précédentes,
**caractérisé en ce que** le composant de précontrainte (114; 214) comprend un dispositif de sécurisation pour sécuriser la position relative du composant de joint d'étanchéité (112; 212) et du composant de précontrainte (114; 214), au moins dans le sens axial, de préférence sous forme de saillies de sécurisation.

13. Dispositif de dosage selon une des revendications précédentes,
**caractérisé en ce que** le composant de précontrainte (114; 214) comprend une section de fixation (134) s'étendant dans un sens radial pour fixer le composant de précontrainte (114; 214) à une structure principale (141; 241), comme par exemple le dispositif de dosage.

14. Dispositif de dosage selon la revendication 13,
**caractérisé en ce que** la section de fixation (134) est adaptée sous forme d'une bride radiale (134), de préférence périphérique.

15. Dispositif de dosage selon une des revendications précédentes,
**caractérisé en ce que** le composant de précontrainte (114; 214) est au moins dans la région des sections de ressort radial (122; 222), de préférence aussi dans la région du support de ressort (126), fabriqué en métal.

16. Dispositif de dosage selon une des revendications précédentes en prenant en considération la revendication 2,
**caractérisé en ce que** le composant de génération de force de serrage (254) est adapté comme un anneau entourant le composant de précontrainte (114; 214) au moins dans la région de ses sections de ressort radial (122; 222).

17. Dispositif de dosage selon la revendication 16,
**caractérisé en ce qu'**une saillie radiale (256) est formée au composant de génération de force de serrage (254) adapté en anneau qui projette du composant de génération de force de serrage (254) vers le composant de précontrainte (114; 214).

18. Dispositif de dosage selon la revendication 16 ou 17,
**caractérisé en ce qu'**au moins une partie des sections de ressort radial (122; 222), de préférence toutes les sections de ressort radial (122; 222), à leur face orientée á l'opposé du composant de joint d'étanchéité (112; 212) sont formées inclinées.
